# EUROPEAN PATENT APPLICATION

(11) **EP 4 693 152 A1**
(43) Date of publication of application: **11.02.2026**
(21) Application number: 24780576.5
(22) Date of filing: 27.03.2024
(51) Int. Cl.: G06Q 40/04, H04L 7/00

(54) **TIME CORRECTION SYSTEM FOR SECURITIES EXCHANGE SERVER OR SECURITIES COMPANY SERVER**

(30) Priority: 30.03.2023 JP 2023056306
(71) Applicant: The Chugoku Electric Power Co., Inc., Hiroshima-shi, Hiroshima 730-8701 (JP)
(72) Inventor: FUKUHARA Yoji, Hiroshima-shi, Hiroshima 730-8701 (JP); KAMATA Ryosuke, Hiroshima-shi, Hiroshima 730-8701 (JP); TANABE Ryota, Hiroshima-shi, Hiroshima 730-8701 (JP); TAKANO Tomohiro, Hiroshima-shi, Hiroshima 730-8701 (JP); TOYOTA Mitsuo, Hiroshima-shi, Hiroshima 730-8701 (JP); TAKI Yoshihiko, Tokyo 102-0094 (JP)
(74) Representative: Hoffmann Eitle
(86) International application number: PCT/JP2024/012520
(87) International publication number: WO 2024/204475

(57) **Abstract**

An object of the present invention is to provide a system that enables to correct a time in a stock exchange server.

A system that includes a first NTP server and a stock exchange server, the system comprising a time deviation calculator that calculates a time deviation between the first NTP server and the stock exchange server by executing communication between the first NTP server and the stock exchange server; and a time corrector that corrects a time in the stock exchange server based on the calculated time deviation.

## Description

### Technical Field

The present invention relates to a system and a method.

### Background Art

**In** recent years, online transactions of financial products such as stocks have been actively conducted. **In** stock trading, transaction data changes from moment to moment, and time information of the transaction data such as times of buying orders or selling orders is very important.

**In** such online transaction, servers corresponding to functions such as servers that manage orders or servers that record transactions operate, for example, in stock exchanges or securities firms. **In** order to distribute loads and improve reliability of the transactions, the servers corresponding to functions operate while executing synchronization processing between a plurality of server apparatuses.

**In** this way, in order to ensure information regarding transaction times in transaction systems in which the plurality of servers cooperate, it is required that there is no time deviation between the servers for functions or in the plurality of server apparatuses.

### Summary of Invention

### Technical Problem

The present invention aims, for example, at any of the following objects. A first object of the present invention is to provide a system capable of correcting a time in a stock exchange server. A second object of the present invention is to provide a system capable of correcting a time in a securities firm server or a securities firm terminal. A third object of the present invention is to provide a system in which a stock exchange server can determine that trading information received from a securities firm server or a securities firm terminal is valid under the conditions that communication is executed between an NTP server and the securities firm server or the securities firm terminal and a time in the securities firm server or the securities firm terminal is corrected.

### Solution to Problem

The present invention solves the above problem by any of the following:
[1] A system that includes a first NTP server and a stock exchange server, the system comprising: a time deviation calculator that calculates a time deviation between the first NTP server and the stock exchange server by executing communication between the first NTP server and the stock exchange server; and a time corrector that corrects a time in the stock exchange server based on the calculated time deviation;
[2] The system according to [1], wherein the stock exchange server includes a first information transmitter that transmits information or a signal to the first NTP server; and the first NTP server includes a second information transmitter that transmits information or a signal to the stock exchange server, and wherein the time deviation calculator calculates the time deviation between the first NTP server and the stock exchange server based on a time at which the first NTP server transmits the information or the signal to the stock exchange server, a time at which the stock exchange server transmits the information or the signal to the first NTP server, a time at which the first NTP server transmits and the stock exchange server receives and clocks a time, and a time at which the stock exchange server transmits and the first NTP server receives and clocks a time;
[3] The system according to [1] or [2], comprising: a phase deviation calculator that calculates a clock phase deviation between the first NTP server and the stock exchange server by executing communication between the first NTP server and the stock exchange server; and a phase corrector that corrects a phase in the stock exchange server based on the calculated phase deviation;
[4] The system according to [3], wherein the stock exchange server includes a first information transmitter that transmits information or a signal to a first NTP server; and the first NTP server includes a second information transmitter that transmits information or a signal to the stock exchange server, and wherein the phase deviation calculator calculates the phase deviation based on a phase difference between a phase of a carrier wave included in the information or the signal transmitted from the first NTP server to the stock exchange server and a phase of a signal oscillated by an oscillator of a clock of the stock exchange server when the stock exchange server receives the information or the signal, and a phase difference between a phase of a carrier wave included in the information or the signal transmitted from the stock exchange server to the first NTP server and a phase of a signal oscillated by an oscillator of a clock of the first NTP server when the first NTP server receives the information or the signal;
[5] A system that includes a second NTP server and a securities firm server or a securities firm terminal, the system comprising: a time deviation calculator that calculates a time deviation between the second NTP server and the securities firm server or the securities firm terminal by executing communication between the second NTP server and the securities firm server or the securities firm terminal; and a time corrector that corrects a time in the securities firm server or the securities firm terminal based on the calculated time deviation;
[6] The system according to [5], wherein the securities firm server or the securities firm terminal includes a third information transmitter that transmits information or a signal to the second NTP server; and the second NTP server includes a fourth information transmitter that transmits information or a signal to the securities firm server or the securities firm terminal, wherein the time deviation calculator calculates a time deviation between the second NTP server and the securities firm server or the securities firm terminal based on a time at which the second NTP server transmits the information or the signal to the securities firm server or the securities firm terminal, a time at which the securities firm server or the securities firm terminal transmits the information or the signal to the second NTP server, a time at which the second NTP server transmits and the securities firm server or the securities firm terminal receives and clocks a time, and a time at which the securities firm server or the securities firm terminal transmits and the second NTP server receives and clocks a time;
[7] The system according to [5] or [6], comprising: a phase deviation calculator that calculates a clock phase deviation between the second NTP server and the securities firm server or the securities firm terminal by executing communication between the second NTP server and the securities firm server or the securities firm terminal; and a phase corrector that corrects a phase in the securities firm server or the securities firm terminal based on the calculated phase deviation;
[8] The system according to [7], wherein the securities firm server or the securities firm terminal includes a third information transmitter that transmits information or a signal to the second NTP server; and the second NTP serve includes a fourth information transmitter that transmits information or a signal to the securities firm server or the securities firm terminal, and wherein the phase deviation calculator calculates the phase deviation based on a phase difference between a phase of a carrier wave included in the information or the signal transmitted from the second NTP server to the securities firm server or the securities firm terminal and a phase of a signal oscillated by an oscillator of a clock of the securities firm server or the securities firm terminal when the securities firm server or the securities firm terminal receives the information or the signal, and a phase difference between a phase of a carrier wave included in the information or the signal transmitted from the securities firm server or the securities firm terminal to the second NTP server and a phase of a signal oscillated by an oscillator of a clock of the second NTP server when the second NTP server receives the information or the signal;
[9] A system that includes an NTP server, a securities firm server or a securities firm terminal, and a stock exchange server, the system comprising: a time deviation calculator that calculates a time deviation between the NTP server and the securities firm server or the securities firm terminal by executing communication between the NTP server and the securities firm server or the securities firm terminal; a time corrector that corrects a time in the securities firm server or the securities firm terminal based on the calculated time deviation; and the securities firm server or the securities firm terminal includes a trading information transmitter that transmits trading information regarding buying or selling of securities to the stock exchange server; and the stock exchange server includes a first determinator that determines whether the trading information received from the securities firm server or the securities firm terminal is valid in accordance with whether execution or non-execution of the time corrector within a predetermined period;
[10] The system according to [9], comprising: a phase deviation calculator that calculates a clock phase deviation between the NTP server and the securities firm server or the securities firm terminal by executing communication between the NTP server and the securities firm server or the securities firm terminal; a phase corrector that corrects a phase in the securities firm server or the securities firm terminal based on the calculated phase deviation; and wherein the stock exchange server includes a second determinator that determines whether the trading information received from the securities firm server or the securities firm terminal is valid in accordance with whether execution or non-execution of the phase corrector within a predetermined period;
[11] A method comprising: a time deviation calculation step of calculating a time deviation between a first NTP server and a stock exchange server by executing communication between the first NTP server and the stock exchange server; and a time correction step of correcting a time in the stock exchange server based on the calculated time deviation;
[12] A method comprising: a time deviation calculation step of calculating a time deviation between the second NTP server and the securities firm server or the securities firm terminal by executing communication between the second NTP server and the securities firm server or the securities firm terminal; and a time correction step of correcting a time in the securities firm server or the securities firm terminal based on the calculated time deviation;
[13] A method comprising: a time deviation calculation step of calculating a time deviation between an NTP server and a securities firm server or a securities firm terminal by executing communication between the NTP server and the securities firm server or the securities firm terminal; a time correction step of correcting a time in the securities firm server or the securities firm terminal based on the calculated time deviation; a trading information transmission step of the securities firm server or a securities firm terminal transmitting trading information regarding buying or selling of securities to a stock exchange server; and a determination step of the stock exchange server determining whether the trading information received from the securities firm server or the securities firm terminal is valid in accordance with whether execution or non-execution of the time corrector within a predetermined period.

### Advantageous Effects of Invention

According to the present invention, a time in a stock exchange server can be corrected. According to the present invention, a time in a securities firm server or a securities firm terminal can also be corrected. According to the present invention, a stock exchange server can determine that trading information received from a securities firm server or a securities firm terminal is valid under the conditions that communication is executed between an NTP server and the securities firm server or the securities firm terminal and a time in the securities firm server or the securities firm terminal is corrected.

### Brief Description of Drawings

Fig. 1 is a block diagram illustrating a configuration of a system according to a first embodiment of the present invention.
Fig. 2 is a block diagram illustrating a configuration of an NTP server according to the embodiment of the present invention.
Fig. 3 is a block diagram illustrating a configuration of a stock exchange server according to the embodiment of the present invention.
Fig. 4 is a block diagram illustrating a configuration of a securities firm server according to the embodiment of the present invention.
Fig. 5 is a flowchart illustrating synchronization processing of a clock according to the first embodiment of the present invention.
Fig. 6 is a block diagram illustrating a configuration of a system according to a second embodiment of the present invention.
Fig. 7 is a block diagram illustrating a configuration of the securities firm server according to the second embodiment of the present invention.
Fig. 8 is a flowchart illustrating synchronization processing of a clock according to the second embodiment of the present invention.
Fig. 9 is a diagram illustrating a flowchart of transaction processing according to the second embodiment of the present invention.

### Description of Embodiments

Hereinafter, embodiments of the invention will be described with reference to the accompanying drawings. It should be noted that the description regarding the effects illustrates one aspect of the effects of the embodiments of the invention and is not limited to those specifically mentioned herein. The order of the respective processes constituting the flowchart described hereinafter may be changed as long as such a change does not cause contradictions or inconsistencies in the processing contents. Furthermore, as long as it does not cause any contradictions or inconsistencies in the processing contents, some of the processes constituting the flowchart may be omitted, or new processes may be added. Furthermore, an apparatus that primarily executes each process of the flowchart may be changed to another apparatus, provided that such a change does not depart from the spirit of the present invention. In that case, it is also possible to modify the processing contents so as to avoid any contradictions or inconsistencies.

The "first NTP server" is not particularly limited as long as the first NTP server is an NTP server. An NTP server according to the following first embodiment corresponds to a "first NTP server". The "second NTP server" according to the second embodiment is not particularly limited as long as the second NTP server is an NTP server. An NTP server in the following second embodiment corresponds to a "second NTP server". The "first NTP server" may be the same as or different from the "second NTP server", but the "first NTP server" is preferably a higher-level NTP server than the "second NTP server".

### [First Embodiment]

### (System)

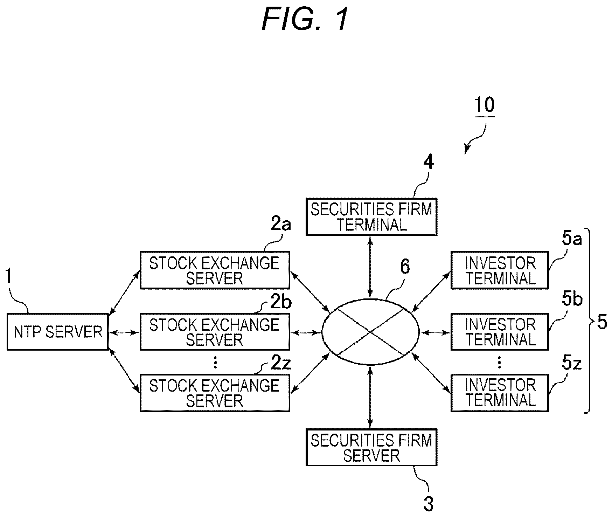

Fig. 1 is a block diagram illustrating a configuration of a system according to a first embodiment of the present invention. As illustrated, according to the first embodiment, a system 10 includes an NTP server 1, a stock exchange server 2, and a securities firm server 3. The system 10 may include a securities firm terminal 4 and an investor terminal 5. The NTP server 1 and the stock exchange server 2 can be directly communicably connected. The NTP server 1 can be communicably connected to the securities firm server 3 via a communication network 6. The stock exchange server 2 can be communicably connected to the securities firm server 3 via the communication network 6. The securities firm terminal 4 and the investor terminal 5 can be communicably connected to the stock exchange server 2 and the securities firm server 3, respectively, via the communication network 6.

The NTP server 1 is a reference apparatus that synchronizes clocks of the stock exchange servers 2, and one NTP server 1 can function as an NTP server for the plurality of stock exchange servers 2. The system 10 according to the present invention may include one or a plurality of NTP servers 1. The system 10 according to the present invention may include one or a plurality of stock exchange servers 2 (stock exchange server 2a, 2b, ..., 2z).

The stock exchange server 2 can be communicably connected to each of the NTP server 1 and the securities firm server 3. In the present system, times of the stock exchange servers 2 are synchronized using a time clocked by the NTP server 1 as a reference, and phases of signals generated by oscillators in the stock exchange servers 2 are synchronized using a phase of a signal generated by an oscillator in the NTP server 1 as a reference.

The stock exchange server 2 may function as an NTP server for other stock exchange servers. Times of the other stock exchange servers are synchronized using a time clocked by the stock exchange server 2 as a reference, and phases of signals generated by the oscillators in the other stock exchange servers are synchronized using a phase of a signal generated by the oscillator in the stock exchange server 2 as a reference.

### (NTP Server)

The NTP server 1 according to the present invention will be described. The network time protocol server (NTP server) is a server used to execute time synchronization on a computer network and can provide accurate time. It is possible to correctly set a clock of a computer apparatus by making an inquiry from the computer apparatus through a TCP/IP network using an NTP (Network Time Protocol).

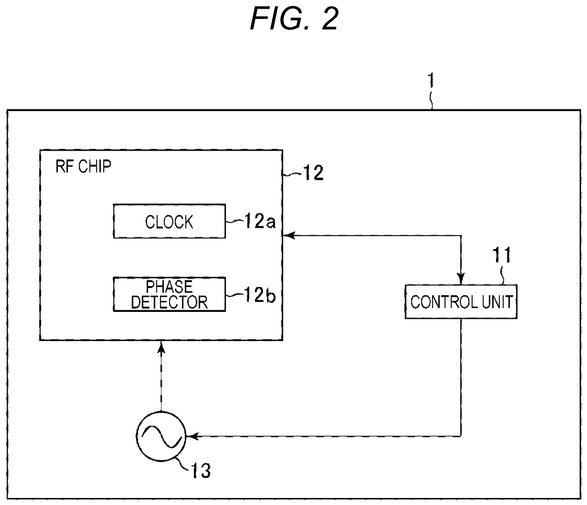

Fig. 2 is a block diagram illustrating a configuration of an NTP server according to the embodiment of the present invention. The NTP server 1 includes a control unit 11, an RF chip 12, and an oscillator 13. The RF chip 12 includes a clock 12a and a phase detector 12b. The NTP server 1 may further include other configuration as needed in addition to the control unit 11, the RF chip 12, the oscillator 13, a clock 12a, and a phase detector 12b.

The control unit 11 is not particularly limited. For example, a microcomputer (microcontroller) can be used. The control unit 11 executes program execution processing based on a program and data. The RF chip 12 executes processing for receiving and transmitting a radio signal. Data received by the RF chip 12 is an arithmetic processing target by the control unit 11.

The oscillator 13 oscillates at a predetermined frequency and outputs a signal for providing an operational timing of each unit of an apparatus. As the oscillator 13, an atomic oscillator or a crystal oscillator can be used. The clock 12a clocks an output signal of the oscillator 13 as a source vibration and outputs time. A time clocked by the clock 12a is controlled by the control unit 11 to be transmitted to the stock exchange server 2 via the RF chip 12. The phase detector 12b detects a phase of a carrier wave included in information received from the stock exchange server 2 and detects a phase of a signal oscillated by the oscillator 13 in the NTP server 1.

### (Stock Exchange Server)

The stock exchange server 2 according to the present invention will be described. The stock exchange server 2 is a server apparatus that supports a transaction system operated by the stock exchange. The stock exchange server 2 can receive information regarding trading of securities from the securities firm server 3 or the securities firm terminal 4 operated by a securities firm or a financial institution receiving orders for securities such as stocks, bonds, and investment trusts from investors, and can establish a transaction between investors.

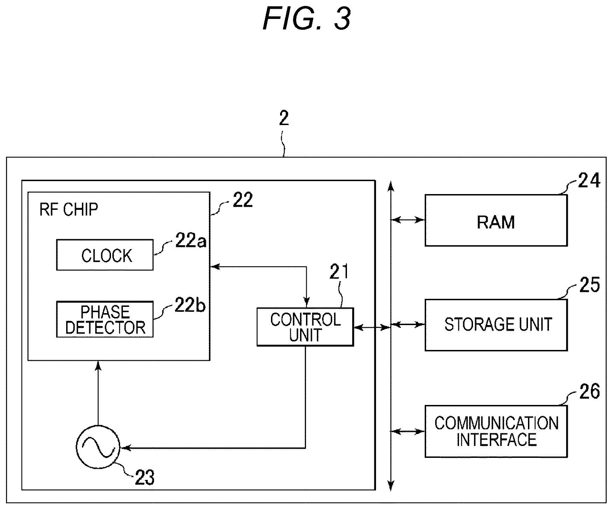

Fig. 3 is a block diagram illustrating a configuration of a stock exchange server according to the embodiment of the present invention. The stock exchange server 2 includes a control unit 21, an RF chip 22, an oscillator 23, a RAM 24, a storage unit 25, and a communication interface 26 that are connected via a bus.

The RF chip 22 includes a clock 22a and a phase detector 22b. The stock exchange server 2 may include another configuration as necessary in addition to the control unit 21, the RF chip 22, the oscillator 23, a clock 22a, and a phase detector 22b.

The control unit 21 includes a CPU and a ROM. The control unit 21 executes a program stored in the storage unit 25 and controls the stock exchange server 2. The RAM 24 is a work area of the control unit 21. The storage unit 25 is a storage area where programs and data are stored. The control unit 21 executes arithmetic processing based on the program and data read from the RAM24 and the data input by the input unit.

The RF chip 22 can transmit and receive data to and from other computer apparatuses. The data received by the RF chip 22 is loaded into the RAM 24 and is an arithmetic processing target by the control unit 21.

The oscillator 23 oscillates at a predetermined frequency and outputs a signal for giving an operational timing of each unit of the apparatus. As the oscillator 23, for example, a crystal oscillator can be used. The clock 22a clocks the output signal of the oscillator 23 as a source vibration and outputs a time. The time clocked by the clock 22a is controlled by the control unit 21 such that the clock is transmitted to the NTP server 1 via the RF chip 22. The phase detector 22b detects a phase of a carrier wave included in information received from the NTP server 1, and detects a phase of a signal oscillated by the oscillator 23 of the stock exchange server 2.

### (Securities Firm Server)

Next, the securities firm server will be described. The securities firm server is a concept including not only a server apparatus managed and operated by a securities firm but also a server apparatus managed and operated by a financial institution that handles securities. When orders for securities (trading information regarding trading of securities) such as stocks, bonds, and investment trusts are received from investor terminals operated by an investor, the transaction information is transmitted to the stock exchange server.

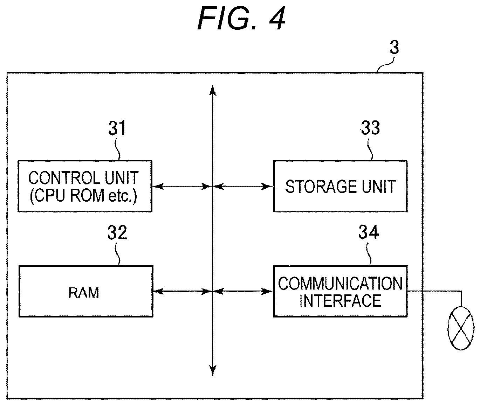

Fig. 4 is a block diagram illustrating a configuration of a securities firm server according to the embodiment of the present invention. The securities firm server 3 includes at least a control unit 31, a RAM 32, a storage unit 33, and a communication interface 34 that are connected via an internal bus.

The control unit 31 includes a CPU and a ROM, executes a program stored in the storage unit 33, and controls the securities firm server 3. The control unit 31 includes an internal timer that clocks a time. The RAM 32 is a work area of the control unit 31. The storage unit 33 is a storage region where programs and data are stored. The control unit 31 reads a program and data from the RAM 32 and executes program execution processing based on information or the like received from the NTP server 1 or the stock exchange server 2.

### (Securities Firm Terminal)

Next, the securities firm terminal will be described. The securities firm terminal is a concept including not only a computer apparatus operated by an employee or the like of a securities firm but also a computer apparatus operated by an employee or the like of a financial institution that handles securities. When orders for securities (trading information regarding trading of securities) such as stocks, bonds, and investment trusts are received from investors, the trading information can be transmitted to the stock exchange server by operating the securities firm terminal. In Fig. 1, the securities firm server 3 and the securities firm terminal 4 are included in the system, but the securities firm terminal 4 may be included instead of the securities firm server 3 (without including the securities firm server 3).

The securities firm terminal 4 is not particularly limited as long as the securities firm terminal 4 can be connected to other apparatuses of the system 10 through wired or wireless communication. The securities firm terminal 4 is preferably, for example, a computer apparatus such as a smartphone, a tablet terminal, or a notebook computer including an input unit, a display unit, and a control unit. The securities firm terminal 4 includes a control unit, a RAM, a storage unit, a communication interface, an input unit, and a display unit. The control unit of the securities firm terminal 4 includes a CPU and a ROM and executes a program stored in the storage unit to control the securities firm terminal 4. The RAM is a work area of the control unit. The storage unit is a storage region where programs and data are stored. The control unit reads a program and data from the RAM and executes program execution processing based on information and the like received from the stock exchange server 2, the securities firm server 3, and the investor terminal 5.

The display unit of the securities firm terminal 4 may be a touch panel in which a display screen of the display unit includes a touch sensor. The touch panel may be a contact type or a contactless type. The touch panel may also function as an input unit.

### (Investor Terminal)

Next, the investor terminal will be described. The investor terminal 5 (investor terminals 5a, 5b, ..., 5z) is a terminal operated by an investor. The investor terminal 5 can access a securities firm server from a website of a securities firm disclosed on the Internet and can input trading information regarding trading of securities. The investor terminal is not particularly limited as long as the investor terminal is a computer apparatus such as a smartphone, a tablet terminal, or a personal computer. The investor terminal 5 includes a control unit, a RAM, a storage unit, a communication interface, an input unit, and a display unit.

### (Synchronization Processing)

In a stock exchange, a plurality of servers are provided to cooperate in order to efficiently process trading information from the securities firm server 3. For example, as the stock exchange servers 2, servers that have different functions, such as trading information management servers that receive and store trading information from the securities firm server 3, and transaction information management servers that determine whether transactions are established based on buying information and selling information in the trading information, store transaction information indicating that the transactions are established, and transmit the transaction information to the securities firm server 3, cooperate. A plurality of servers that have the same function may be provided to cooperate with each other. Each of the plurality of servers cooperating as the stock exchange server 2 can appropriately process a large amount of trading information by executing time synchronization with the NTP server 1 and clocking an accurate time.

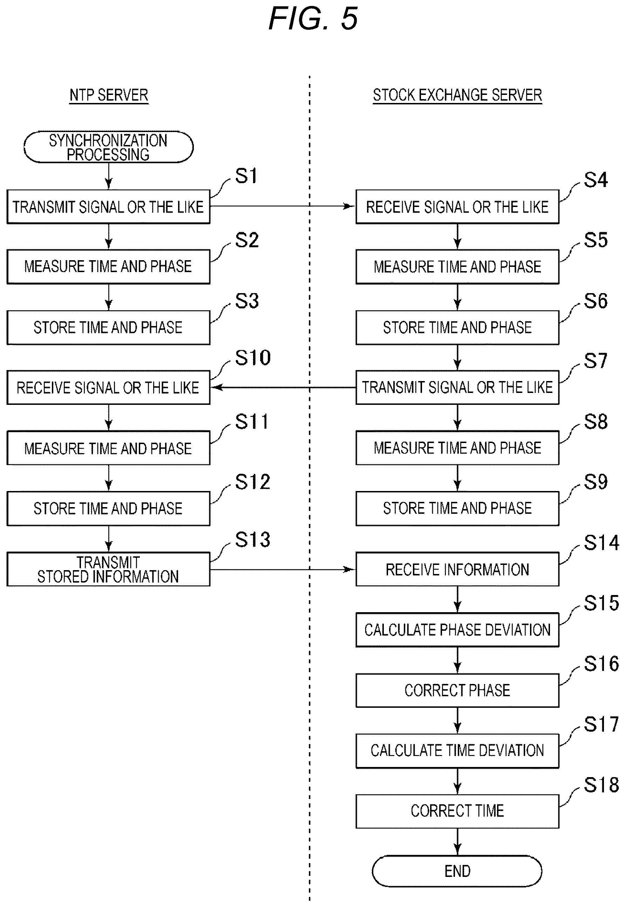

Next, synchronization processing of a clock according to the first embodiment of the present invention will be described. Fig. 5 is a flowchart illustrating synchronization processing of a clock according to the first embodiment of the present invention.

The synchronization processing of the stock exchange server 2 may be executed, for example, at predetermined intervals or when a predetermined condition is satisfied. For example, the synchronization processing of steps S1 to S18 can be set to be started once a day at a preset predetermined time.

First, information or a signal is transmitted from an NTP server 1 to a stock exchange server 2 (step S1). Information or a signal transmitted from the NTP server 1 to the stock exchange server 2 is not particularly limited. The NTP server 1 clocks a time at which the information or the signal is transmitted in step S1 and measures a phase at the transmission (step S2). Then, the clocked time and the measured phase are stored in a memory in the control unit 11 (step S3).

Subsequently, the stock exchange server 2 receives the information or the signal from the NTP server 1 (step S4). The stock exchange server 2 clocks a time at which the information or the signal is received in step S4 and measures a phase at the reception (step S5). Then, the clocked time and the measured phase are stored in the storage unit 25 (step S6).

Subsequently, the stock exchange server 2 transmits information or a signal to the NTP server 1 (step S7). The information or the signal transmitted from the stock exchange server 2 to the NTP server 1 is not particularly limited. The stock exchange server 2 clocks a time at which the information or the signal is transmitted in step S7 and measures a phase at the transmission (step S8). Then, the clocked time and the measured phase are stored in the storage unit 25 (step S9).

The NTP server 1 receives the information or the signal transmitted in step S7 (step S10). The NTP server 1 clocks a time at which the information or the signal is received in step S10 and measures a phase at the reception (step S11). Then, the clocked time and the measured phase are stored in the memory in the control unit 11 (step S12). When step S12 ends, the processing proceeds to step S13.

In the NTP server 1, the RF chip 12 transmits information regarding the time and the phase at the transmission of the signal in step S1 stored in step S3 and information regarding the time and the phase at the reception of the signal in step S10 stored in step S12 to the stock exchange server 2 (step S13).

Then, the stock exchange server 2 receives the information regarding the time at which the NTP server 1 transmitted the information or the signal and the phase at the transmission in step S1 and the information regarding the time at which the NTP server 1 receives the information or the signal and the phase at the reception in step S10 (step S14).

Subsequently, the control unit 21 of the stock exchange server 2 calculates a phase deviation between the phase of the signal generated by the oscillator 13 of the NTP server 1 and the phase of the signal generated by the oscillator 23 of the stock exchange server 2 (step S15). The phase deviation can be calculated based on a phase difference between a phase of a carrier wave included in information or a signal transmitted from the NTP server 1 to the stock exchange server 2 and a phase of a signal oscillated by the oscillator 23 of the stock exchange server 2 when the stock exchange server 2 receives the information or the signal, and a phase difference between a phase of a carrier wave included in information or a signal transmitted from the stock exchange server 2 to the NTP server 1 and a phase of a signal oscillated by the oscillator 13 of the NTP server 1 when the NTP server 1 receives the information or the signal.

The phase of the carrier wave included in the information or the signal transmitted from the NTP server 1 to the stock exchange server 2 is the phase of the information or the signal transmitted in step S1. The information regarding the phase is transmitted from the NTP server 1 to the stock exchange server 2 in step S13. The phase of the signal oscillated by the oscillator 23 of the stock exchange server 2 when the stock exchange server 2 receives the information or the signal is the phase of the information or the signal received in step S4. The information regarding the phase is measured by the stock exchange server 2 in step S5 and is stored in step S6. The phase of the carrier wave included in the information or the signal transmitted from the stock exchange server 2 to the NTP server 1 is, for example, the phase of the information or the signal transmitted in step S7. The information regarding the phase is stored by the stock exchange server 2 in step S9. The phase of the signal oscillated by the oscillator 13 of the NTP server 1 when the NTP server 1 receives the information or the signal is, for example, the phase of the information or the signal received in step S10. The information regarding the phase is measured in step S11 and is transmitted from the NTP server 1 to the stock exchange server 2 in step S13.

Here, the phase of the carrier wave included in the information or the signal transmitted from the NTP server 1 to the stock exchange server 2 is a concept including not only the phase of the carrier wave included in the information or the signal transmitted from the NTP server 1 to the stock exchange server 2 but also the phase of the carrier wave included in the signal obtained by mixing down the information or the signal. Similarly, the phase of the carrier wave included in the information or the signal transmitted from the stock exchange server 2 to the NTP server 1 is a concept including not only the phase of the carrier wave included in the information or the signal transmitted from the stock exchange server 2 to the NTP server 1 but also the phase of the carrier wave included in the signal obtained by mixing down the information or the signal.

When the phase difference between the phase of the carrier wave included in the information or the signal transmitted from the NTP server 1 to the stock exchange server 2 and the phase of the signal oscillated by the oscillator 23 of the stock exchange server 2 when the stock exchange server 2 receives the information or the signal is defined as ΔΦs, and the phase difference between the phase of the carrier wave included in the information or the signal transmitted from the stock exchange server 2 to the NTP server 1 and the phase of the signal oscillated by the oscillator 13 of the NTP server 1 when the NTP server 1 receives the information or the signal is defined as ΔΦ_{M}, a phase difference ΔΦ_{P} caused due to a signal propagating between the NTP server 1 and the stock exchange server 2 can be calculated from an arithmetic mean of the phase difference ΔΦ_{S} and the phase difference ΔΦ_{M}. That is, the phase difference ΔΦ_{P} can be calculated by Formula (1): ΔΦ_{P} = 1/2 × (ΔΦ_{S} + ΔΦ_{M}).

When the phase deviation between the NTP server 1 and the stock exchange server 2 is defined as ΔΦ_{C}, a relationship expressed by Formula (2): ΔΦ_{M} = ΔΦ_{P} + (- ΔΦ_{C}) is established. Therefore, the phase deviation ΔΦ_{C} can be calculated by subtracting the phase difference ΔΦ_{M} from the phase difference ΔΦ_{P}. That is, the phase deviation ΔΦ_{C} can be calculated by Formula (3): ΔΦ_{C} = 1/2 × (ΔΦ_{S} - ΔΦ_{M}). In step S15, the phase deviation between the NTP server 1 and the stock exchange server 2 is calculated using Formula (3).

Here, the phase deviation ΔΦ_{C} is calculated by Formula (3), but the phase deviation ΔΦ_{C} to be calculated may be obtained by further subtracting 2π or 4π, that is, 2nπ. n may take 0 or a positive integer. Therefore, it is also possible to specify whether n is 0, 1, or 2 (that is, whether a value obtained by further subtracting 2nπ from the phase deviation ΔΦ_{C} obtained by Formula (3) is an original phase deviation or whether a value obtained without the subtraction is the original phase deviation) based on a propagation time T_{P} to be described below or a time deviation between the NTP server 1 and the stock exchange server 2.

A signal transmitted from the NTP server 1 to the stock exchange server 2 and a signal transmitted from the stock exchange server 2 to the NTP server 1 may start from a state in which an output at the start of transmission is not 0 but any value. In this case, it is necessary to correct the phase deviation ΔΦ_{C} by measuring the phase and the transmission time at the start of transmission. By normally making the phase at the start of transmission constant and executing the transmission at a predetermined time, it is possible to omit processing for correcting ΔΦ_{C} after measuring the phase and the transmission time at the start of transmission.

The stock exchange server 2 corrects the phase of the signal generated by the oscillator 23 of the stock exchange server 2 to achieve synchronization with the signal generated by the oscillator 13 of the NTP server 1 based on the calculated phase deviation ΔΦ_{C} (step S16). The correction of the phase in step S16 is controlled and executed by the control unit 21. The phase deviation of the oscillator 23 of the stock exchange server 2 occurs due to the influence of the environment around the stock exchange server 2. By executing the synchronization processing periodically in this manner, the clock 22a of the stock exchange server 2 can be continuously clocked with high accuracy.

Subsequently, in the NTP server 1, the time deviation between the NTP server 1 and the stock exchange server 2 is calculated based on a time at which the NTP server 1 transmits information or a signal to the stock exchange server 2, a time at which the stock exchange server 2 transmits information or a signal to the NTP server 1, a time at which the NTP server 1 transmits information or a signal and the stock exchange server 2 receives the information or a signal and clocks a time, and a time at which the stock exchange server 2 transmits information or a signal and the NTP server 1 receives the information or the signal and clocks a time (step S17).

The time at which the NTP server 1 transmits information or a signal to the stock exchange server 2 is the time at which the information is transmitted in step S1. Information regarding the time is transmitted from the NTP server 1 to the stock exchange server 2 in step S13. The time at which the information or the signal is transmitted from the stock exchange server 2 to the NTP server 1 is the time at which the information or the signal is transmitted in step S7. The information regarding the time is stored by the stock exchange server 2 in step S9. Subsequently, the time at which information or a signal is transmitted from the NTP server 1 and the stock exchange server 2 receives and clocks the time is the time at which the information is received in step S4. The information regarding the time is recorded by the stock exchange server 2 in step S5 and stored in step S6. The time at which information or a signal is transmitted from the stock exchange server 2 and the NTP server 1 receives and clocks the information or the signal is the time at which the information or the signal is received in step S10. The information regarding the time is clocked in step S11 and transmitted from the NTP server 1 to the stock exchange server 2 in step S13.

When the time at which the NTP server 1 transmits information or a signal to the stock exchange server 2 is defined as T_{M}, the time at which the stock exchange server 2 transmits information or a signal to the NTP server 1 is defined as T_{S}, the time at which the NTP server 1 transmits information or a signal and the stock exchange server 2 receives the information or the signal and clocks a time is defined as T_{MS}, and the time at which the stock exchange server 2 transmits information or a signal and the NTP server 1 receives the information or the signal and clocks a time is defined as T_{SM}, the time deviation between the NTP server 1 and the stock exchange server 2 can be calculated by Formula (4): T_{L} = 1/2 × ((T_{SM} - T_{S}) - (T_{MS} - T_{M})). In step S17, the time deviation between the NTP server 1 and the stock exchange server 2 is calculated by Formula (4).

In the stock exchange server 2, when times of the stock exchange servers 2 are corrected to be synchronized with a time of the NTP server 1 based on the calculated time deviation (step S18), a series of processing ends. When the system 10 includes a plurality of stock exchange servers 2 (stock exchange server 2a, 2b, ..., 2z), clock synchronization processing in steps S1 to S18 is executed for each of the plurality of stock exchange servers 2, and a time of each stock exchange server 2 is corrected to be synchronized with the time of the NTP server 1.

In the first embodiment, the example in which the NTP server 1 is used as an apparatus that synchronizes the times of the stock exchange servers 2 has been described, but the stock exchange server 2 may further function as an NTP server executing time synchronization of the securities firm server 3. In this case, the time synchronization can be executed between the stock exchange servers 2 and the securities firm server 3. As a result, it is possible to maintain more accurate time information in the transaction.

### [Second Embodiment]

### (System)

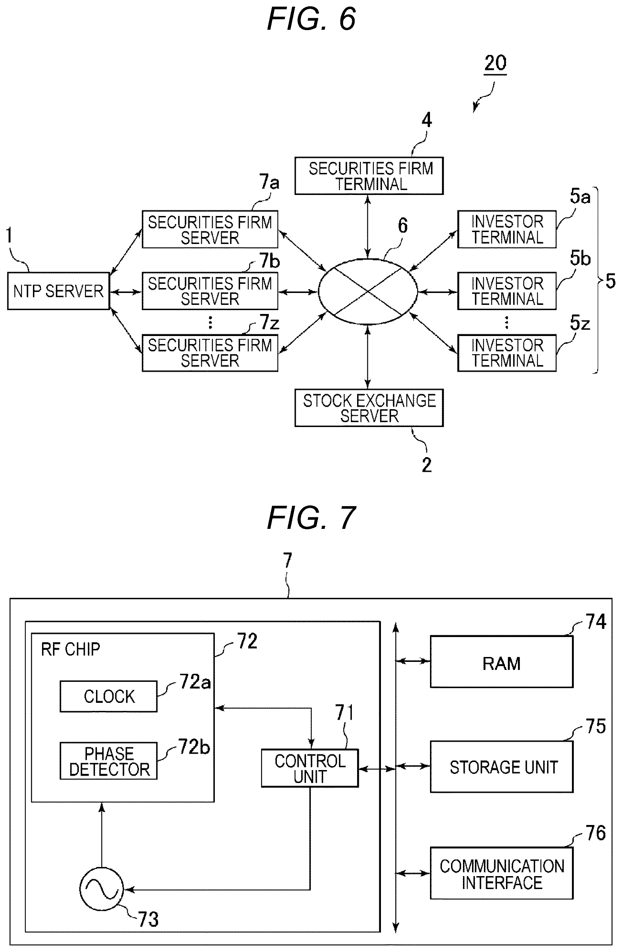

Fig. 6 is a block diagram illustrating a configuration of a system according to a second embodiment of the present invention. As illustrated, in the second embodiment, a system 20 includes an NTP server 1, a stock exchange server 2, and one or more securities firm servers 7. The securities firm server 7 may include one or a plurality of securities firm servers 7 (securities firm server 7a, 7b, ..., 7z). The system 20 may include a securities firm terminal 4 and investor terminals 5. The NTP server 1 and the securities firm servers 7 can be directly communicably connected. The NTP server 1 can be communicably connected to the stock exchange server 2 via a communication network 6. The stock exchange server 2 can be communicably connected to each of the securities firm servers 7 via the communication network 6. Each of the securities firm terminal 4 and the investor terminal 5 can be communicably connected to the stock exchange server 2 and the securities firm servers 7 via the communication network 6.

In the system 20, the NTP server 1 is a reference apparatus that synchronizes clocks of the securities firm servers 7, and one NTP server 1 can function as an NTP server for a plurality of the securities firm servers 7. The system 20 according to the present invention may include one or a plurality of NTP servers 1.

In the system 20, the securities firm server 7 can communicate with each of the NTP server 1 and the stock exchange server 2. In the present system, times of the securities firm servers 7 are synchronized using a time clocked by the NTP server 1 as a reference, and phases of signals generated by oscillators in the securities firm servers 7 are synchronized using a phase of a signal generated by an oscillator in the NTP server 1 as a reference.

The securities firm server 7 may function as the NTP server 1 with respect to other securities firm servers. The time of the other securities firm server is synchronized with the time clocked by the securities firm server 7, and the phase of the signal generated by the oscillator in the other securities firm server is synchronized with the phase of the signal generated by the oscillator in the securities firm server 7.

In the second embodiment, as the NTP server 1, the stock exchange server 2, the securities firm terminal 4, and the investor terminal 5 that have configurations similar to those of the NTP server 1, the stock exchange server 2, the securities firm terminal 4, and the investor terminal 5 in the system 10 according to the first embodiment can be used.

In the second embodiment, as described above, the stock exchange server 2 that has the same configuration as the stock exchange server 2 used in the system 10 according to the first embodiment may be used, or the stock exchange server 2 that has the same configuration as the securities firm server 3 used in the system 10 according to the first embodiment may be used.

In the second embodiment, the securities firm server 7 that has the same configuration as the stock exchange server 2 used in the system 10 according to the first embodiment is used. Hereinafter, a configuration of the securities firm server according to the second embodiment of the present invention will be described. Fig. 7 is a block diagram illustrating a configuration of the securities firm server according to the second embodiment of the present invention.

As illustrated in Fig. 7, the securities firm server 7 includes a control unit 71, an RF chip 72, an oscillator 73, a RAM 74, a storage unit 75, and a communication interface 76. The securities firm server 7 may have another configuration as necessary. The RF chip 72 includes a clock 72a and a phase detector 72b.

The control unit 71 includes a CPU and a ROM. The control unit 71 executes a program stored in the storage unit 75 and controls the securities firm server 7. The RAM 74 is a work area of the control unit 71. The storage unit 75 is a storage region where programs and data are stored. The control unit 71 executes arithmetic processing based on a program and data read from the RAM 74 and data input by the input unit.

The RF chip 72 can transmit and receive data to and from another computer apparatus (or other computer apparatuses). The data received by the RF chip 72 is loaded to the RAM 74 and subjected to arithmetic processing by the control unit 71.

The oscillator 73 oscillates at a predetermined frequency and outputs a signal for giving an operational timing of each unit of the apparatus. As the oscillator 73, for example, a crystal oscillator can be used. The clock 72a clocks an output signal of the oscillator 73 as a source vibration and outputs a time. The time clocked by the clock 72a is controlled by the control unit 71 such that the time is transmitted to the NTP server 1 via the RF chip 72. The phase detector 72b detects a phase of a carrier wave included in the information received from the NTP server 1 and detects a phase of a signal oscillated by the oscillator 73 of the securities firm server 7.

### (Synchronization Processing)

In a securities company, in order to efficiently process the trading information received from a large number of investor terminals and the transaction information received from the stock exchange server 2, multiple servers are provided and are coordinated. For example, as the securities firm server 7, there are servers having different functions that work together, such as a trading information management server that receives and stores trading information from the investor terminal 5 and transmits it to the stock exchange server 2, and a transaction information management server that receives and stores transaction information from the stock exchange server 2 indicating that a trade has been concluded, and transmits it to the investor terminal 5. In addition, it is also acceptable to provide multiple servers having the same functions so that they coordinate with each other. Each of these multiple servers, which coordinate as such a securities firm server 7, performs time synchronization with the NTP server 1 and keeps accurate time, making it possible to appropriately process large volumes of trading information and transaction information.

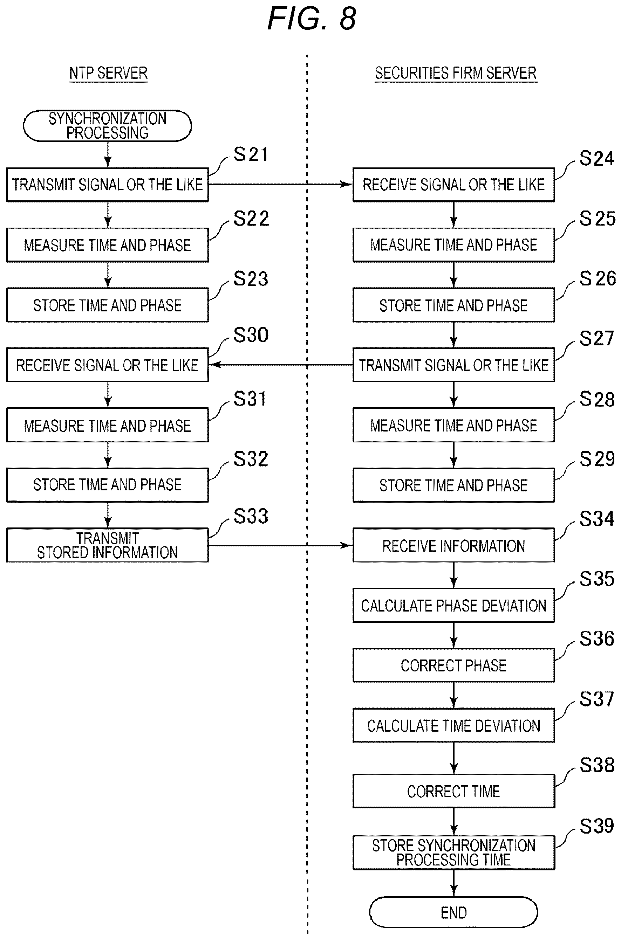

Next, synchronization processing of a clock processing according to the second embodiment of the present invention will be described. Fig. 8 is a flowchart illustrating synchronization processing of a clock according to the second embodiment of the present invention.

The synchronization processing of the securities firm server 7 may be executed, for example, every predetermined time or whenever a predetermined condition is satisfied. For example, the synchronization processing of steps S21 to S39 can be set to be started once a day at a preset predetermined time.

First, information or a signal is transmitted from an NTP server 1 to a securities firm server 7 (step S21). Information or a signal transmitted from the NTP server 1 to the securities firm server 7 is not particularly limited. The NTP server 1 clocks a time at which the information or the signal is transmitted in step S21 and measures a phase at the transmission (step S22). Then, the clocked time and the measured phase are stored in a memory in the control unit 11 (step S23).

Subsequently, the securities firm server 7 receives the information or the signal from the NTP server 1 (step S24). The NTP server 1 clocks a time at which the information or the signal is received in step S24 and measures a phase at the reception (step S25). Then, the clocked time and the measured phase are stored in the storage unit 75 (step S26).

Next, the securities firm server 7 transmits the information or a signal to the NTP server 1 (step S27). The information or the signal transmitted from the securities firm server 7 to the NTP server 1 is not particularly limited. The securities firm server 7 clocks a time when the information or the signal is transmitted in step S27, and measures a phase at the transmission (step S28). Then, the storage unit 75 stores the clocked time and the measured phase (step S29).

The NTP server 1 receives the information or the signal transmitted in step S27 (step S30). The NTP server 1 clocks a time at which the information or the signal is received in step S30 and measures the phase at the reception (step S31). Then, the clocked time and the measured phase are stored in the memory in the control unit 11 (step S32). When step S32 ends, the process proceeds to step S33.

In the NTP server 1, the RF chip 12 transmits information regarding the time and the phase at the transmission of the signal in step S21 stored in step S23 and information regarding the time and the phase at the reception of the signal in step S30 stored in step S22 to the securities firm server 7 (step S33).

Then, the securities firm server 7 receives the information regarding the time at which the NTP server 1 transmitted the information or the signal and the phase at the transmission in step S21 and the information regarding the time at which the NTP server 1 receives the information or the signal and the phase at the reception in step S30 (step S34).

Subsequently, the control unit 71 of the securities firm server 7 calculates a phase deviation between the phase of the signal generated by the oscillator 13 of the NTP server 1 and the phase of the signal generated by the oscillator 73 of securities firm server 7 (step S35). The phase deviation can be calculated based on a phase difference between a phase of a carrier wave included in information or a signal transmitted from the NTP server 1 to the securities firm server 7 and a phase of a signal oscillated by the oscillator 73 of the securities firm server 7 when the securities firm server 7 receives the information or the signal, and a phase difference between a phase of a carrier wave included in information or a signal transmitted from the securities firm server 7 to the NTP server 1 and a phase of a signal oscillated by the oscillator 13 of the NTP server 1 when the NTP server 1 receives the information or the signal.

The phase of the carrier wave included in the information or the signal transmitted from the NTP server 1 to the securities firm server 7 is the phase of the information or the signal transmitted in step S21. The information regarding the phase is transmitted from the NTP server 1 to the securities firm server 7 in step S33. The phase of the signal oscillated by the oscillator 73 of the securities firm server 7 when the securities firm server 7 receives the information or the signal is the phase of the information or the signal received in step S24. The information regarding the phase is measured by the securities firm server 7 in step S25 and is stored in step S26. The phase of the carrier wave included in the information or the signal transmitted from the securities firm server 7 to the NTP server 1 is, for example, the phase of the information or the signal transmitted in step S27. The information regarding the phase is stored by the securities firm server 7 in step S29. The phase of the signal oscillated by the oscillator 13 of the NTP server 1 when the NTP server 1 receives the information or the signal is, for example, the phase of the information or the signal received in step S30. The information regarding the phase is measured in step S31 and is transmitted from the NTP server 1 to the securities firm server 7 in step S33.

Here, the phase of the carrier wave included in the information or the signal transmitted from the NTP server 1 to the securities firm server 7 is a concept including not only the phase of the carrier wave included in the information or the signal transmitted from the NTP server 1 to the stock exchange server 2 but also the phase of the carrier wave included in the signal obtained by mixing down the information or the signal. Similarly, the phase of the carrier wave included in the information or the signal transmitted from securities firm server 7 to the NTP server 1 is a concept including not only the phase of the carrier wave included in the information or the signal transmitted from securities firm server 7 to the NTP server 1 but also the phase of the carrier wave included in the signal obtained by mixing down the information or the signal.

When the phase difference between the phase of the carrier wave included in the information or the signal transmitted from the NTP server 1 to the securities firm server 7 and the phase of the signal oscillated by the oscillator 73 of the securities firm server 7 when the securities firm server 7 receives the information or the signal is defined as ΔΦ_{S}, and the phase difference between the phase of the carrier wave included in the information or the signal transmitted from the securities firm server 7 to the NTP server 1 and the phase of the signal oscillated by the oscillator 13 of the NTP server 1 when the NTP server 1 receives the information or the signal is defined as ΔΦ_{M}, a phase difference ΔΦ_{P} caused due to a signal propagating between the NTP server 1 and the securities firm server 7 can be calculated from an arithmetic mean of the phase difference ΔΦ_{S} and the phase difference ΔΦ_{M}. That is, the phase difference ΔΦ_{P} can be calculated by Formula (1): ΔΦ_{P} = 1/2 × (ΔΦ_{S} + ΔΦ_{M}).

When the phase deviation between the NTP server 1 and the securities firm server 7 is defined as ΔΦ_{C}, a relationship expressed by Formula (2): ΔΦ_{M} = ΔΦ_{P} + (- ΔΦ_{C}) is established. Therefore, the phase deviation ΔΦ_{C} can be calculated by subtracting the phase difference ΔΦ_{M} from the phase difference ΔΦ_{P}. That is, the phase deviation ΔΦ_{C} can be calculated by Formula (3): ΔΦ_{C} = 1/2 × (ΔΦ_{S} - ΔΦ_{M}). In step S35, the phase deviation between the NTP server 1 and the securities firm server 7 is calculated using Formula (3).

Here, the phase deviation ΔΦ_{C} is calculated by Formula (3), but the phase deviation ΔΦ_{C} to be calculated may be obtained by further subtracting 2π or 4π, that is, 2nπ. n may take 0 or a positive integer. Therefore, it is also possible to specify whether n is 0, 1, or 2 (that is, whether a value obtained by further subtracting 2nπ from the phase deviation ΔΦ_{C} obtained by Formula (3) is an original phase deviation or whether a value obtained without the subtraction is the original phase deviation) based on a propagation time T_{P} to be described below or a time deviation between the NTP server 1 and the securities firm server 7.

A signal transmitted from the NTP server 1 to the securities firm server 7 and a signal transmitted from the securities firm server 7 to the NTP server 1 may start from a state in which an output at the start of transmission is not 0 but any value. In this case, it is necessary to correct the phase deviation ΔΦ_{C} by measuring the phase and the transmission time at the start of transmission. By normally making the phase at the start of transmission constant and executing the transmission at a predetermined time, it is possible to omit processing for correcting ΔΦ_{C} after measuring the phase and the transmission time at the start of transmission.

The securities firm server 7 corrects the phase of the signal generated by the oscillator 73 of the securities firm server 7 to achieve synchronization with the signal generated by the oscillator 13 of the NTP server 1 based on the calculated phase deviation ΔΦ_{C} (step S36). The correction of the phase in step S36 is controlled and executed by the control unit 71. The phase deviation of the oscillator 73 of the securities firm server 7 occurs due to the influence of the environment around the securities firm server 7. By executing the synchronization processing periodically in this manner, the clock 72a of the securities firm server 7 can be continuously clocked with high accuracy.

Subsequently, in the NTP server 1, the time deviation between the NTP server 1 and the securities firm server 7 is calculated based on a time at which the NTP server 1 transmits information or a signal to the securities firm server 7, a time at which the securities firm server 7 transmits information or a signal to the NTP server 1, a time at which the NTP server 1 transmits information or a signal and the securities firm server 7 receives the information or a signal and clocks a time, and a time at which the securities firm server 7 transmits information or a signal and the NTP server 1 receives the information or the signal and clocks a time (step S37).

The time at which the NTP server 1 transmits information or a signal to the securities firm server 7 is the time at which the information is transmitted in step S21. Information regarding the time is transmitted from the NTP server 1 to the securities firm server 7 in step S33. The time at which the information or the signal is transmitted from the securities firm server 7 to the NTP server 1 is the time at which the information or the signal is transmitted in step S27. The information regarding the time is stored by the securities firm server 7 in step S29. Subsequently, the time at which information or a signal is transmitted from the NTP server 1 and the securities firm server 7 receives and clocks the time is the time at which the information is received in step S24. The information regarding the time is recorded by the securities firm server 7 in step S25 and stored in step S26. The time at which information or a signal is transmitted from the securities firm server 7 and the NTP server 1 receives and clocks the information or the signal is the time at which the information or the signal is received in step S30. The information regarding the time is clocked in step S31 and transmitted from the NTP server 1 to the securities firm server 7 in step S33.

When the time at which the NTP server 1 transmits information or a signal to the securities firm server 7 is defined as T_{M}, the time at which the securities firm server 7 transmits information or a signal to the NTP server 1 is defined as T_{S}, the time at which the NTP server 1 transmits information or a signal and the securities firm server 7 receives the information or the signal and clocks a time is defined as T_{MS}, and the time at which the securities firm server 7 transmits information or a signal and the NTP server 1 receives the information or the signal and clocks a time is defined as T_{SM}, the time deviation between the NTP server 1 and the securities firm server 7 can be calculated by Formula (4): T_{L} = 1/2 × ((T_{SM} - T_{S}) - (T_{MS} - T_{M})). In step S37, the time deviation between the NTP server 1 and the securities firm server 7 is calculated by Formula (4).

The securities firm server 7 corrects the time in the securities firm server 7 to achieve synchronization with the time of the NTP server 1 based on the calculated time deviation (step S38). And the securities firm server 7 stores the time at which the synchronization processing of a time in the securities firm server 7 (the correction of the time) is executed (step S39), the series of processes ends. The time at which the synchronization processing of a time (time correction) in the securities firm server 7 is preformed is referred to as a synchronization processing time. In a case where the system 10 includes plural securities firm servers 7, the synchronization processing of a time of steps S21 to S39 is executed for each of the plural securities firm servers 7, and the time in each securities firm servers 7 is corrected to achieve synchronization with the time of the NTP server 1.

### (Transaction Processing)

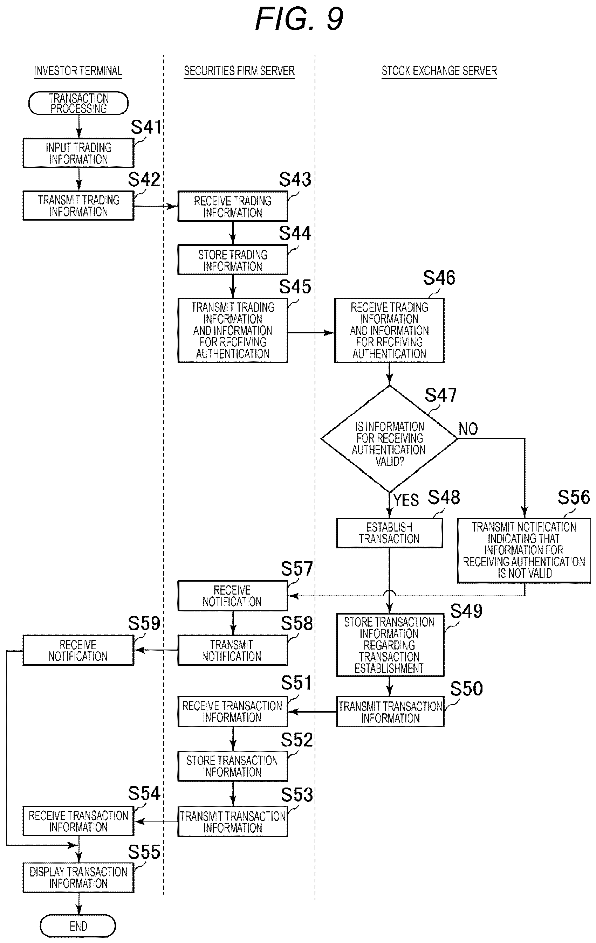

Transaction processing according to the second embodiment will be described. Fig. 9 is a diagram illustrating a flowchart of transaction processing according to the embodiment of the present invention.

First, an investor who desires an investment transaction inputs trading information with the investor terminal 5 owned by the investor (step S41). The trading information includes, for example, stock information (stock code or the like) that allows an investor to specify a stock that the investor desires to purchase or sell, a transaction method (for example, a real purchase or a real sale), a market (for example, whether the stock price is Tokyo Stock Exchange or PTS), the number of stocks, a limit order or a market order, a purchase price or a sale price in the case of the limit order, and a period (within the same day or specified period). The investor terminal 5 transmits the trading information to the securities firm server 7 (step S42).

The securities firm server 7 receives the trading information and stores the trading information desired by the investor (steps S43 and S44). The securities firm server 7 transmits the trading information and information for receiving authentication to the stock exchange server 2 (step S45). The information for receiving authentication includes, for example, identification information (securities firm identification ID) with which the securities firm server can be identified, and information regarding a time (synchronization processing time) at which the most recent synchronization processing of clocks is executed in the securities firm server.

The stock exchange server 2 receives the trading information and the information for receiving the authentication (step S46). Based on the received information, the stock exchange server 2 determines whether the information for receiving the authentication is valid (step S47). Determining whether the information for receiving the authentication is valid means determining that the information is valid when information regarding a time at which the securities firm server 7 executes the clock synchronization processing most recently is within a predetermined time from an actual time. The information regarding the time when the securities firm server 7 executes the synchronization processing of the clock most recently is a synchronization processing time stored in the clock synchronization processing in step S39 of Fig. 8. The predetermined time can be appropriately set in the stock exchange server 2.

In determining whether the information for receiving the authentication is valid in step S47, the stock exchange server 2 may determine that the information is valid in a case where calculation processing of the phase deviation in step S35 and correction processing of the phase in step S36 are executed or in a case where the calculation processing of the time deviation in step S37 and the correction processing of the time in step S38 are executed when the securities firm server 7 executes the clock synchronization processing within the predetermined time. When the phase deviation does not occur as a result of calculating the phase deviation in step S35, the processing of step S36 can be omitted. Therefore, in a case where there is no phase deviation, the stock exchange server 2 can determine that the information is valid in step S47 even when the phase correction processing in step S36 is not executed. In a case where there is no time deviation as a result of calculating the time deviation in step S37, the processing of step S38 can be omitted. Therefore, in the case where there is no time deviation, the stock exchange server 2 can determine that the information is valid in step S47 even when the time correction processing in step S38 is not executed.

In step S47, the stock exchange server 2 determines whether the information for receiving the authentication is valid (that is, the stock exchange server 2 determines whether the trading information received from the securities firm server 7 is valid), and thus executes the time synchronization, and thus only the trading information appropriately processed by the securities firm server 7 can be handled as valid trading information.

Subsequently, when the stock exchange server 2 determines in step S47 that the information for receiving the authentication is valid (YES in step S47), the trading transaction is established (step S48). The stock exchange server 2 stores transaction information regarding transaction establishment in the storage unit 25 (step S49) and transmits the transaction information to the securities firm server 7 (step S50).

Subsequently, the securities firm server 7 receives the transaction information (step S51) and stores the transaction information in the storage unit 75 (step S52). The securities firm server 7 transmits the transaction information to the investor terminal 5 (step S53).

Then, the investor terminal 5 receives the transaction information (step S54). Here, the transaction information includes the establishment of the transaction. The transaction information is displayed on the display unit of the investor terminal 5 (step S55), and the series of processing ends.

When the stock exchange server 2 determines in step S47 that the information for receiving the authentication is not valid (NO in step S47), the stock exchange server 2 transmits a notification indicating that the information for receiving the authentication is not valid to the securities firm server 7 (step S56). The securities firm server 7 receives the notification (step S57) and transmits the notification to the investor terminal 5 (step S58).

When the investor terminal 5 receives the notification (step S59), the fact that the information for receiving the authentication is not valid or the transaction is not established based on the notification is displayed as transaction information on the display unit of the investor terminal 5 (step S35), and the series of processing ends.

As described above, the synchronization processing according to the second embodiment is executed by the NTP server 1 and the securities firm server 7, but may be executed by the NTP server 1 and the securities firm terminal 4 instead of the securities firm server 7. Specifically, the processing of steps S24 to S29 and S34 to S39 may be executed in the securities firm terminal 4. The transaction processing according to the second embodiment is executed by the investor terminal 5, the NTP server 1, and the securities firm server 7, but may be executed by the investor terminal 5, the NTP server 1, and the securities firm terminal 4 instead of the securities firm server 7. Specifically, the processing of steps S43 to S45, S51 to S53, S57, and S58 may be executed in the securities firm terminal 4. In this case, as the securities firm terminal 4, a securities firm terminal that includes an input unit and a display unit in addition to the same configuration as the securities firm server 7 can be used.

According to the present invention, it is possible to correct a time in the stock exchange server. Further, according to the present invention, it is possible to correct the time in the securities firm server or the securities firm terminal. According to the present invention, the stock exchange server can determine that the trading information received from the securities firm server or the securities firm terminal is valid under the conditions that communication is executed between the NTP server and the securities firm server or the securities firm terminal, and the time in the securities firm server or the securities firm terminal is corrected.

### Reference Signs List

- 1: NTP server,
- 2: Stock exchange server,
- 3,7: Securities firm server,
- 4: Securities firm terminal,
- 5: Investor terminal,
- 6: Communication network,
- 10: System,
- 11: Control unit,
- 12: RF chip,
- 12a: Clock,
- 12b: Phase detector,
- 13: Oscillator,
- 21: Control unit,
- 22: RF chip,
- 22a: Clock,
- 22b: Phase detector,
- 23: Oscillator,
- 24: RAM,
- 25: Storage unit,
- 26: Communication interface,
- 31: Control unit, 32 RAM,
- 33: Storage unit,
- 34: Communication interface,
- 71: Control unit,
- 72: RF chip,
- 72a: Clock,
- 72b: Phase detector,
- 73: Oscillator,
- 74: RAM,
- 75: Storage unit,
- 76: Communication interface

## Claims

1. A system that includes a first NTP server and a stock exchange server, the system comprising:
a time deviation calculator that calculates a time deviation between the first NTP server and the stock exchange server by executing communication between the first NTP server and the stock exchange server; and
a time corrector that corrects a time in the stock exchange server based on the calculated time deviation.

2. The system according to claim 1, wherein
the stock exchange server includes
a first information transmitter that transmits information or a signal to the first NTP server; and
the first NTP server includes
a second information transmitter that transmits information or a signal to the stock exchange server, and
wherein the time deviation calculator calculates the time deviation between the first NTP server and the stock exchange server based on a time at which the first NTP server transmits the information or the signal to the stock exchange server, a time at which the stock exchange server transmits the information or the signal to the first NTP server, a time at which the first NTP server transmits and the stock exchange server receives and clocks a time, and a time at which the stock exchange server transmits and the first NTP server receives and clocks a time.

3. The system according to claim 1 or 2, comprising:
a phase deviation calculator that calculates a clock phase deviation between the first NTP server and the stock exchange server by executing communication between the first NTP server and the stock exchange server; and
a phase corrector that corrects a phase in the stock exchange server based on the calculated phase deviation.

4. The system according to claim 3, wherein
the stock exchange server includes
a first information transmitter that transmits information or a signal to a first NTP server; and
the first NTP server includes
a second information transmitter that transmits information or a signal to the stock exchange server, and
wherein the phase deviation calculator calculates the phase deviation based on a phase difference between a phase of a carrier wave included in the information or the signal transmitted from the first NTP server to the stock exchange server and a phase of a signal oscillated by an oscillator of a clock of the stock exchange server when the stock exchange server receives the information or the signal, and a phase difference between a phase of a carrier wave included in the information or the signal transmitted from the stock exchange server to the first NTP server and a phase of a signal oscillated by an oscillator of a clock of the first NTP server when the first NTP server receives the information or the signal.

5. A system that includes a second NTP server and a securities firm server or a securities firm terminal, the system comprising:
a time deviation calculator that calculates a time deviation between the second NTP server and the securities firm server or the securities firm terminal by executing communication between the second NTP server and the securities firm server or the securities firm terminal; and
a time corrector that corrects a time in the securities firm server or the securities firm terminal based on the calculated time deviation.

6. The system according to claim 5, wherein
the securities firm server or the securities firm terminal includes
a third information transmitter that transmits information or a signal to the second NTP server; and
the second NTP server includes
a fourth information transmitter that transmits information or a signal to the securities firm server or the securities firm terminal,
wherein the time deviation calculator calculates a time deviation between the second **NTP** server and the securities firm server or the securities firm terminal based on a time at which the second NTP server transmits the information or the signal to the securities firm server or the securities firm terminal, a time at which the securities firm server or the securities firm terminal transmits the information or the signal to the second NTP server, a time at which the second NTP server transmits and the securities firm server or the securities firm terminal receives and clocks a time, and a time at which the securities firm server or the securities firm terminal transmits and the second NTP server receives and clocks a time.

7. The system according to claim 5 or 6, comprising:
a phase deviation calculator that calculates a clock phase deviation between the second NTP server and the securities firm server or the securities firm terminal by executing communication between the second NTP server and the securities firm server or the securities firm terminal; and
a phase corrector that corrects a phase in the securities firm server or the securities firm terminal based on the calculated phase deviation.

8. The system according to claim 7, wherein
the securities firm server or the securities firm terminal includes
a third information transmitter that transmits information or a signal to the second NTP server; and
the second NTP serve includes
a fourth information transmitter that transmits information or a signal to the securities firm server or the securities firm terminal, and
wherein the phase deviation calculator calculates the phase deviation based on a phase difference between a phase of a carrier wave included in the information or the signal transmitted from the second NTP server to the securities firm server or the securities firm terminal and a phase of a signal oscillated by an oscillator of a clock of the securities firm server or the securities firm terminal when the securities firm server or the securities firm terminal receives the information or the signal, and a phase difference between a phase of a carrier wave included in the information or the signal transmitted from the securities firm server or the securities firm terminal to the second NTP server and a phase of a signal oscillated by an oscillator of a clock of the second NTP server when the second NTP server receives the information or the signal.

9. A system that includes an NTP server, a securities firm server or a securities firm terminal, and a stock exchange server, the system comprising:
a time deviation calculator that calculates a time deviation between the NTP server and the securities firm server or the securities firm terminal by executing communication between the NTP server and the securities firm server or the securities firm terminal;
a time corrector that corrects a time in the securities firm server or the securities firm terminal based on the calculated time deviation; and
the securities firm server or the securities firm terminal includes
a trading information transmitter that transmits trading information regarding buying or selling of securities to the stock exchange server; and
the stock exchange server includes
a first determinator that determines whether the trading information received from the securities firm server or the securities firm terminal is valid in accordance with whether execution or non-execution of the time corrector within a predetermined period.

10. The system according to claim 9, comprising:
a phase deviation calculator that calculates a clock phase deviation between the NTP server and the securities firm server or the securities firm terminal by executing communication between the NTP server and the securities firm server or the securities firm terminal;
a phase corrector that corrects a phase in the securities firm server or the securities firm terminal based on the calculated phase deviation; and
wherein the stock exchange server includes
a second determinator that determines whether the trading information received from the securities firm server or the securities firm terminal is valid in accordance with whether execution or non-execution of the phase corrector within a predetermined period.

11. A method comprising:
a time deviation calculation step of calculating a time deviation between a first NTP server and a stock exchange server by executing communication between the first NTP server and the stock exchange server; and
a time correction step of correcting a time in the stock exchange server based on the calculated time deviation.

12. A method comprising:
a time deviation calculation step of calculating a time deviation between the second NTP server and the securities firm server or the securities firm terminal by executing communication between the second NTP server and the securities firm server or the securities firm terminal; and
a time correction step of correcting a time in the securities firm server or the securities firm terminal based on the calculated time deviation.

13. A method comprising:
a time deviation calculation step of calculating a time deviation between an NTP server and a securities firm server or a securities firm terminal by executing communication between the NTP server and the securities firm server or the securities firm terminal;
a time correction step of correcting a time in the securities firm server or the securities firm terminal based on the calculated time deviation;
a trading information transmission step of the securities firm server or a securities firm terminal transmitting trading information regarding buying or selling of securities to a stock exchange server; and
a determination step of the stock exchange server determining whether the trading information received from the securities firm server or the securities firm terminal is valid in accordance with whether execution or non-execution of the time corrector within a predetermined period.
